# EUROPEAN PATENT SPECIFICATION

(11) **EP 2 706 301 B1**
(45) Date of publication and mention of the grant of the patent: **28.03.2018**
(21) Application number: 12183351.1
(22) Date of filing: 06.09.2012
(51) Int. Cl.: F24D 3/08, F24D 11/00, F24D 17/00, F28D 20/00, F24D 19/10

(54) **Heating system with solar heating means for domestic hot water and space heating**
Heizungsanlage mit solarem Heizmittel zur Warmwasserbereitung und Raumbeheizung
Système de chauffage avec moyens de chauffage solaire pour de l'eau chaude domestique et chauffage d'espace

(43) Date of publication of application: 12.03.2014
(73) Proprietor: Vaillant GmbH, 42859 Remscheid (DE)
(72) Inventor: Morilleau, Nicolas, 44000 Nantes (FR); Couraud, Christophe, 44690 SAINT FIACRE SUR MAINE (FR); Roger, Adrien, 44340 Bouguenais (FR)
(74) Representative: Hocker, Thomas

(56) References cited:
- EP-A2- 1 729 071
- EP-A2- 2 218 972
- WO-A1-2011/078767
- DE-A1- 10 212 113

## Description

### FIELD OF THE INVENTION

The present invention relates to a heating system, and more particularly to a heating system enabling solar energy to be used for heating domestic water and space heating.

### BACKGROUND OF THE INVENTION

A typical domestic heating system comprises a gas or oil fired boiler operable to heat a transfer fluid, such as water, which is pumped around a boiler circuit. The boiler circuit is typically connected, via suitable valves to space heaters, such as radiators or under floor heating loop, so that the heat output from the boiler can be used for space heating purposes. The boiler circuit is also typically connected, via suitable valves, to a heat exchanger coupled with a water tank so that the heat output from the boiler can be used to heat the water stored within the cylinder for drinking, bathing, washing, or other domestic usage.

Increasingly, there is a need to make use of renewal energy resources, for example solar energy, in order to reduce reliance upon oil or gas and thereby preserving these resources as well as reducing the emission of carbon dioxide and other waste products and to reduce cost. Traditionally, in order to make use of solar energy, a building has been provided with two separate heating systems, one using the boiler for spacing heating, and the other using a solar panel as the heat source for heating domestic water. Obviously, such systems are inconvenient.

Some efforts have been made in recent years to try to integrate solar heating and boiler heating into one system. An example such system is disclosed in GB 2 431 228 A, in which, the system includes a water cylinder, a solar panel and a boiler for heating the water inside of the cylinder via a first and a second heat exchanger coil respectively, and space heaters for acquiring heat from the hot water within the cylinder via a third heater exchanger coil. The boiler is able to provide heat output to space heaters for heating the building as well. In this case, the boiler is used as a supplement when the solar heating output is insufficient for domestic hot water usage and/or space heating purposes. However, the configuration of such system is relatively complicated, which may result in a high cost and making trouble to manufacture.

Another example disclosed in DE 102 12 113 A1 with the same applicant as present application, in which, the heating system includes a solar panel and a combustion burner each being able to provide heat to both radiators and water inside of a cylinder. However, the configuration of such system is still complicated and cause a higher cost and troubles for manufacture. Document DE 102 12 113 A1 discloses the features of the preamble of the independent claim.

### SUMMARY OF THE INVENTION

It is an object of present invention to provide a heating system with relatively simple structure and in which solar energy can be used for heating domestic water and space heating.

According to one aspect of the present invention there is provided a heating system comprising a water tank for storage of domestic water; a solar collector associated with the water tank for heating the domestic water; a combustion device (e.g. a fuel fired boiler) coupled with the water tank via a heat exchanger (maybe a plate heat exchanger) for heating the domestic water; and a space heating apparatus (e.g. radiators or under floor heating loop) adapted for being passed through by a hot transfer fluid (e.g. water) thereby radiating heat into space. The combustion device is coupled with the space heating apparatus to heat the transfer fluid for space heating, and the space heating apparatus is coupled with the water tank via the heat exchanger for allowing the domestic water to heat the transfer fluid for space heating. The water tank may define therein an upper combustion heating zone and a lower solar heating zone, and a domestic water pipe circuit is connected between the heat exchanger and the water tank and has a water outgoing line extending downwardly from top of the water tank to a predetermined distance. The upper combustion heating zone and the lower solar heating zone are defined by the bottom of the water outgoing line, thus, the domestic water at the lower solar heating zone is mainly extracted to the heat exchanger via the water outgoing line to heat the transfer fluid when the domestic water is applied for space heating. The heating system further includes a controller operable to judge whether to enable the domestic water to heat the transfer fluid; if not, the controller continues to judge whether to enable the combustion device to heat the transfer fluid. The controller is operable to judge whether to enable the combustion device to heat the domestic water by judging whether the temperature of the domestic water at the upper combustion heating zone is smaller than a first threshold. By this configuration, the water inside of the tank can store solar energy by the solar collector heating the domestic water, and the heated water can be extracted during tap for domestic usage, also can be used for space heating via the heat exchanger without mixing the domestic water and the transfer fluid. In addition, both the combustion device and the space heating apparatus are coupled with the water tank via a common heat exchanger, thus, simplifying the configuration of the whole system and reducing the cost accordingly.

Preferably the controller may be operable to judge whether to enable the combustion device to heat the domestic water prior to judge whether to enable the domestic water to heat the transfer fluid. This arrangement can make sanitary comfort be always ensured.

The foregoing has outlined rather broadly the features and technical advantages of the present invention in order that the detailed description of the invention that follows may be better understood. Additional features and advantages of the invention will be described hereinafter which form the subject of the claims of the invention.

### BRIEF DESCRIPTION OF THE DRAWINGS

For a more complete understanding of the present invention, and the advantages thereof, reference is now made to the following descriptions taken in conjunction with the accompanying drawings, in which:
FIG. 1 is a schematic diagram illustrating a heating system in accordance with one embodiment of present invention;
FIG. 2A and FIG. 2B are schematic illustrations showing two kinds of working status of a first three-way valve of the heating system shown in Fig. 1;
FIG. 3A and FIG. 3B are schematic illustrations showing two kinds of working status of a second three-way valve of the heating system shown in Fig. 1;
FIG. 4A and FIG. 4B are schematic illustrations showing two kinds of working status of a third three-way valve of the heating system shown in Fig. 1;
FIG. 5 is a flowchart showing operation of the heating system shown in Fig. 1.

### DETAILED DESCRIPTION OF THE PREFERRED EMBODIMENTS

Reference will now be made to the drawing figures to describe the preferred embodiments of the present invention in detail. However, the embodiments can not be used to restrict the present invention. Changes such as structure, method and function obviously made to those of ordinary skill in the art are also protected by the present invention.

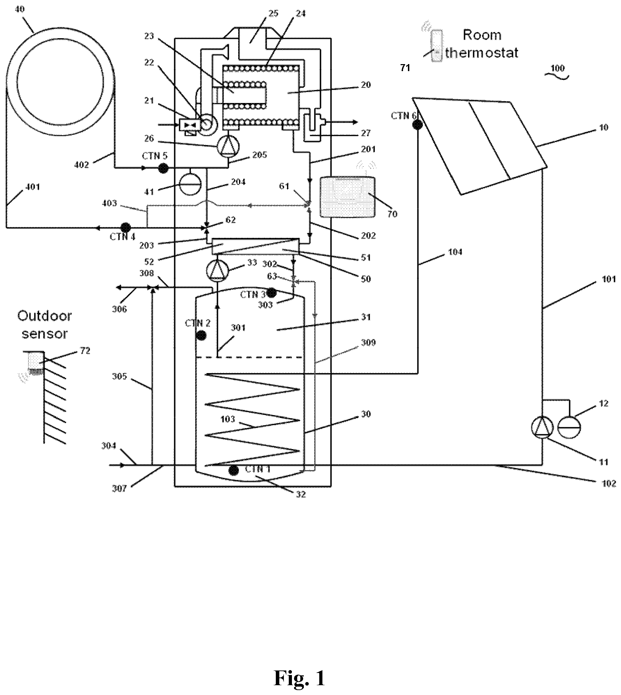

Referring to Fig. 1, in accordance with one embodiment of the present invention, a heating system 100 includes a solar collector 10, a water tank 30 associated with the solar collector 10, a combustion device 20 coupled with the water tank 30 via a heat exchanger 50, and a space heating apparatus 40 coupled with the water tank 30 via the heat exchanger 50.

Solar collector 10 includes a solar panel, a solar coil 103, and hydraulic pipes 101, 104 connected between the solar panel and the solar coil 103. The solar panel can be mounted on the roof of a building for collecting heat by absorbing sunlight and transferring heat to a heat collection fluid. Such heat collection fluid has suitable thermal properties, i.e. high thermal capacity with a low freezing point. The solar coil 103 is in spiral-shaped and disposed within the water tank 30. The heated heat collection fluid passes through the pipe 104 and enters the solar coil 103 to dissipate heat into the domestic water contained in the water tank 30, and then continues to pass through the pipes 102, 101 with the aid of a circulation pump 11 disposed in the hydraulic pipes, and finally return to the solar panel to start another circulation. An expansion vessel 12 is connected to the hydraulic pipes to absorb excess pressure caused by thermal expansion, thereby protecting the closed solar system from excessive pressure. It would be apparent to those skilled in the art that the solar panel could be a photovoltaic module which is composed of a number of solar cells for absorbing sunlight and converting it into electricity, and an immersed electric heating rod is connected with the photovoltaic module via electric wires and disposed in the water tank 30 for heating the domestic water to a desired temperature. In this way, the solar energy can be used for heating the domestic water inside of the tank 30 as well.

The water tank 30 takes a form of an upstanding cylinder. Cold domestic water is fed through water pipes 304, 307 to a bottom of the tank 30, after being heated, hot domestic water rises up to a top of the tank 30, and is drawn out through pipe 308 during tap. The pure hot water mixes with cold water coming from pipe 305 to reach a comfort temperature, and the mixing hot water is distributed through the pipe 306 for a domestic usage, for example, drinking, washing, showering, bathing, etc..

The combustion device 20 can be a typically fuel fired boiler. The fuel may be oil or gas. In this embodiment, the boiler is a gas boiler, and preferably a condensing boiler. The boiler 20 typically includes a gas regulation unit 47 for regulating a desired amount of introducing gas, a fan 22 for sucking air to a desired place, a burner 43 for burning the mixture of the gas and air with a predetermined ratio in a combustion chamber thereby realizing the combustion process, and a primary heat exchanger 24 disposed in the combustion chamber to absorb heat arising from the combustion and transfer the heat to a fluid passing therethrough. A flue exhaust unit 25 is provided in the combustion device 20 with a condensate drain 27 for extraction of additional heat.

The space heating apparatus 40 is typically passed through by a hot transfer fluid, such as hot water, being cooled with heat radiating into space, thus, raising the temperature and improving the comfort inside of the building. The space heating apparatus 40 may be a radiator or an under floor heating loop for providing under floor heating.

In this embodiment, the heat exchanger 50 is a plate heat exchanger disposed outside of the water tank 30. The plate heat exchanger 50 includes a domestic water path 51 and a transfer fluid path 52. The two paths are physically isolated to avoid mixing the domestic water and the transfer fluid, but allowing heat interchanging therebetween. As plate heat exchangers are known in the art, a detailed description of structure and functional operation are omitted for purpose of brevity and simplicity.

A transfer fluid pipe circuit is provided among the combustion device 20, the space heating apparatus 40, and the heat exchanger 50. The transfer fluid pipe circuit includes a number of pipelines 201, 202, 203, 204, 205, 401, 402, 403, a first three-way valve 61 with three ports respectively connecting to the lines 201, 202, 403, and a second three-way valve 62 with three ports respectively connecting to the lines 203, 204, 401. A first circulation pump 26 is disposed within the transfer fluid pipe circuit to actuate circulation of the transfer fluid, and a first expansion vessel 41 is connected to the pipelines to protect the closed circuit from excessive pressure.

A domestic water pipe circuit is provided between the water tank 30 and the heat exchanger 50. The domestic water pipe circuit includes a water outgoing line 301 for extracting the domestic water from the water tank 30 to the heat exchanger 50, and the water outgoing line 301 extends downwardly from the top of the water tank 30 to a predetermined distance. In this embodiment, the water tank 30 defines therein an upper combustion heating zone 31 and a lower solar heating zone 32 by the bottom of the water outgoing line 301, and the solar coil 103 is contained in the lower soar heating zone 32. The function of the upper combustion heating zone 31 and the lower solar heating zone 32 will be fully explained hereinafter.

The domestic water pipe circuit further includes a common water incoming line 302 extending from the heat exchanger 50, a first water incoming line 303 connected to the upper combustion heating zone 31, a second water incoming line 309 connected to the lower solar heating zone 32, and a third three-way valve 63 with three ports respectively connecting to the common water incoming line 302, the first water incoming line 303 and the second water incoming line 309. In a preferred embodiment, the first water incoming line 303 is connected to the top of the water tank 30, and the second water incoming line 309 is connected to the bottom of the water tank 30. A second circulation pump 33 is disposed within the domestic water pipe circuit to actuate circulation of the water.

Also referring to Fig. 1, in order to control the operation of the heating system, a controller 70 and a series of temperature sensors or thermostats are provided. The controller 70 may incorporate a Micro Controller Unit (MCU). Of course, the controller 10 can also use other types of integrated circuits, such as Application Specific Integrated Circuit (ASIC) and Field Programmable Gate Array (FPGA) etc.. The temperature sensors or thermostats may include a room thermostat 71 mounted at a suitable place inside of the room for detecting the room temperature, a outdoor sensor 72 mounted outside of the room to detect the outdoor temperature, a first temperature sensor CTN1 disposed at the lower solar heating zone 32 to detect the temperature of the water within this zone 32, a second temperature sensor CTN2 disposed adjacent to the bottom of the water outgoing line 301 to detect the temperature of the water to be entering the line 301, a third temperature sensor CTN3 disposed at the upper combustion heating zone 31 to detect the temperature of the water within this zone 31, a fourth temperature sensor CTN4 disposed in line 401 to detect the temperature of the transfer fluid before passing through the space heating radiator 40, and a fifth temperature sensor CTN5 disposed in line 402 to detect the temperature of the transfer fluid after passing through the space heating radiator 40. The controller 70 may be coupled with the temperature sensors or thermostats, and other suitable devices via electric wires or wireless. Other suitable devices may include circulation pumps 11, 26, 33, and three-way valves 61, 62, 62, and so on.

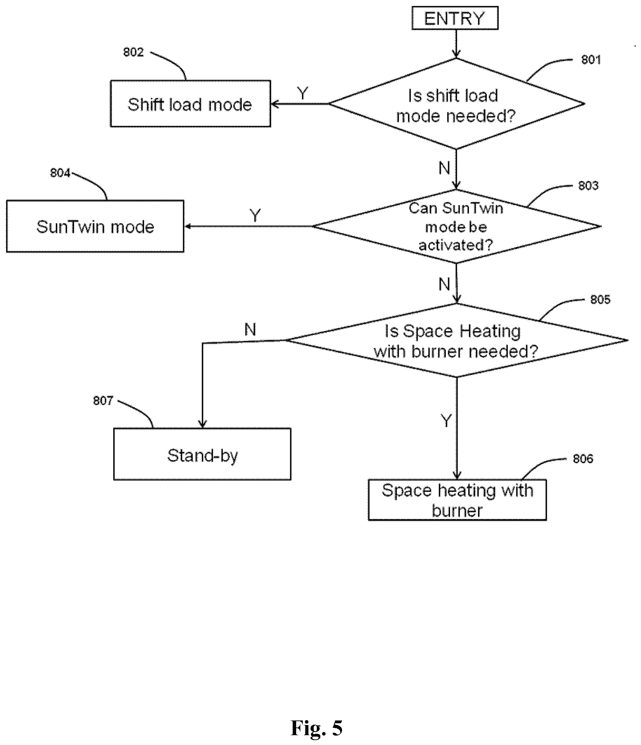

Referring to Fig. 5, in conjunction with Figs. 1, 2A to 4B, the operation of the heating system 100 is controlled by the controller in collaboration with the temperature sensors or thermostats and other suitable devices. The lower solar heating zone 32 of the tank 30 is defined generally below a horizontal plane (shown as the dash line in Fig. 1) where the bottom of the outgoing line 301 locates, accordingly, the upper combustion heating zone 31 of the tank 30 is generally above such horizontal plane. In this embodiment, the bottom of the outgoing line 301 is an entry/outlet to the heat exchanger 50. Since the solar coil 103 is positioned within the lower solar heating zone 32, the water at this zone 32 is mainly heated by solar energy. If no other heating means is applied to the water inside of the water tank 30, the whole tank of water is heated by solar energy and can be output for domestic usage or space heating purpose.

Since it generally takes a long time to heat the water inside of the tank 30 to a preset value via solar energy, the combustion device 20 has to be involved for supplement of the solar heating in some circumstances, for example, in case there is a need for a fast heating of a small volume of water. Also referring to Fig. 5, the controller 70 often first judges whether a shift load mode is needed (step 801), in other words, whether to enable the combustion device 20 to heat the water at the upper combustion heating zone 31 for sanitary comfort. The volume of the upper combustion heating zone 31 depends on the vertical distance of the outgoing line 301 inside of the water tank 30, which depends on the designer's preferences. The controller 70 can receive a signal sent by the third temperature sensor CTN3 to acquire a temperature value representing the domestic water at the upper combustion heating zone 31, and compares it with a predetermined first threshold (e.g. Tank water temperature setpoint - 4K). If the temperature value is smaller than the first threshold, the controller will activate the shift load mode (step 802); if the temperature value is larger than or equals to the first threshold, the controller will go to step 803.

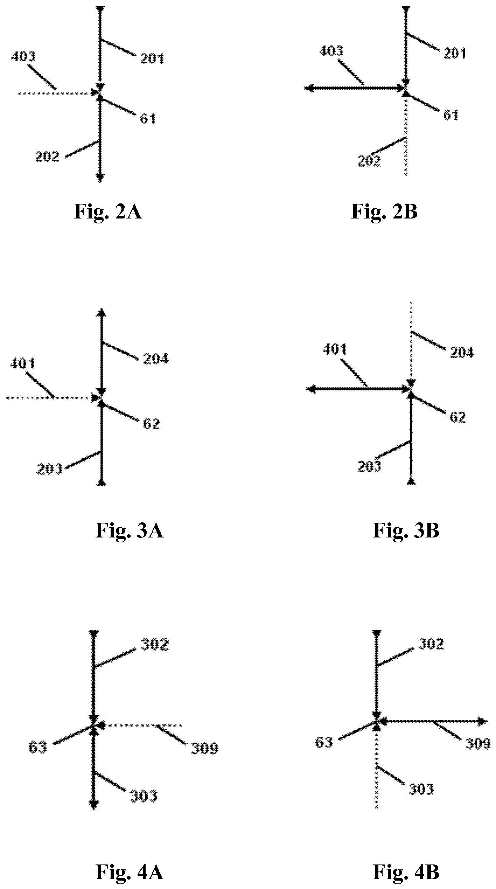

Referring to Fig. 1, in conjunction with Figs. 2A, 3A, 4A, when the heating system works at shift load mode, the first three-way valve 61 is controlled to connect the lines 201 and 202, while block the line 403; the second three-way valve 62 is controlled to connect the lines 203 and 204, while block the line 401; the third three-way valve 63 is controlled to connect the lines 302 and 303, while block the line 309. Under such control, the transfer fluid is heated by the combustion device 20 and cooled during passing through the path 52 of the heat exchanger 50; in the meantime, the cold domestic water around the entry of the outgoing line 301 is drawn out through the outgoing line 301, and absorbs heat after passing through the path 51 of the heat exchanger 50, then the heated domestic water passes through the common water incoming line 302 and the first water incoming line 303 and enters the water tank 30. As the first incoming line 303 is connected to the top of the water tank 30, the incoming hot water first occupies top layer of the tank 30, and then spread downwardly till the hot water volume at upper combustion heating zone 31 reaches the requirement for comfort domestic usage.

Referring back to Fig. 5, in step 803, the controller 70 judges whether the Sun Twin mode can be activated, in other words, whether to enable the domestic water inside of the water tank 30 to heat the transfer fluid to be passing through the space heating apparatus 40. It is appreciate to make full use of the solar energy prior to the non-renewable energy resources, such as fuel. In this embodiment, since the domestic water at the lower solar heating zone 32 is mainly heated by solar energy, the controller prefers to consider whether the domestic water within this zone 32 can be applied for space heating. The controller 70 judges: (1) whether room temperature value is smaller than a second threshold but larger than or equals to a third threshold; (2) whether outdoor temperature value is smaller than a fourth threshold; (3) whether a difference that the temperature of the domestic water at an outlet to the heat exchanger minus the temperature of the transfer fluid after passing through the space heating apparatus is larger than a fifth threshold.

With reference to Figs. 1 and 5, for the judgement (1), the controller 70 receives a signal representing the room temperature from the room thermostat 71, and compares the room temperature value with the second threshold (e.g. the comfort room temperature setpoint + 1 °C) and the third threshold. If the room temperature value is larger than or equals to the second threshold, which means it is warm inside of the room and need not space heating, then the controller 70 goes to step 805; if the room temperature value is smaller than the third threshold, which means it is too cold inside of the room and the required heating power exceeds the maximum of the solar heating power stored in the water tank, then the controller 70 goes to step 805. If the room temperature value is located within the region between the second threshold and the third threshold, the controller 70 will further do the judgement (2).

For the judgement (2), the controller 70 receives a signal representing the outdoor temperature from the outdoor sensor 72, and compares it with the fourth threshold (e.g. 16°C). If the outdoor temperature value is smaller than the fourth threshold, which means the outdoor temperature is not high enough to warm the air inside of the room, then the controller 70 continues to do the judgement (3); otherwise, the controller goes to step 805. For the judgement (3), the controller 70 receives a signal representing the temperature of the domestic water at the entry of the outgoing line 301 (i.e. outlet to the heat exchanger) from the second temperature sensor CTN2 and another signal representing the temperature of the transfer fluid after passing through the space heating radiator 40 from the fifth temperature sensor CTN5, then the controller calculates the difference of the two temperature values and compares it with the fifth threshold (e.g. 5K). If the temperature difference is larger than or equals to the fifth threshold, which means the stored solar energy is high enough for space heating, then the controller goes to step 804, otherwise, the controller goes to step 805. It should be apparent that the three judgements (1) (2) (3) are not limited to follow the sequence as they are numbered, that is, the sequence of the three judgements may vary depending on designer's preference.

Referring to Fig. 1, in conjunction with Figs. 2A, 3B, 4B, in the Sun Twin mode (step 804 as shown in Fig. 5), the domestic water at the lower solar heating zone 32 is allowed to heat the transfer fluid to be passing through the space heating apparatus 40 for space heating purpose. The first three-way valve 61 is controlled to connect the lines 201 and 202, while block the line 403; the second three-way valve 62 is controlled to connect the lines 203 and 401, while block the line 204; the third three-way valve 63 is controlled to connect the lines 302 and 309, while block the line 303. Under such control, the hot domestic water at the lower solar heating zone 32 is extracted through the water outgoing line 301, and dissipates heat during passing through the path 51 of the heat exchanger 50, then the cooled domestic water passes through the common water incoming line 302 and the second water incoming line 309 and returns into the water tank 30 at the bottom. In the meantime, the solar system continues to work with the solar coil 103 heating the domestic water at the lower solar heating zone 32, and the cooled domestic water at the bottom layer gets hot and rises up to the entry of the water outgoing line 301, thus, being recycled for space heating.

On the other side, the transfer fluid absorbs heat when passing through the path 51 of the heat exchanger 50. The heated transfer fluid gets hot and continues to pass through the space heating radiator 40 for radiating heat into room space, then the transfer fluid gets cold and further passes through the combustion device 20, the lines 201 and 201, and goes back the heat exchanger 50 for being reheated. The transfer fluid is circulated repeatedly till deactivation of the Sun Twin mode. The deactivation of the Sun Twin mode may be triggered on certain specific situations as described in the above three judgements. For example, the temperature difference of the domestic water at entry of the water outgoing line 301 minus the transfer fluid after passing through the space heating apparatus is too low; or the room temperature rises up beyond the comfort setpoint + 1 °C; or the room temperature is too low and the combustion device 20 has to be activated for supplemental space heating. Besides the above mentioned situations, the deactivation of the Sun Twin mode also can be triggered when the hot water inside of the water tank 30 is not assured for domestic usage during a simultaneous tap. It should be noted that, in the Sun Twin mode, the combustion device 20 is not operated, which is only used to establish a fluid path connected between the space heating apparatus 40 and the heat exchanger 50.

Referring to Fig. 5, in step 805, the controller 70 judges whether space heating with burner is needed, in other words, whether to enable the combustion device 20 to heat the transfer fluid. The controller 70 receives a signal representing the room temperature from the room thermostat 71, and compares it with a sixth threshold (e.g. room comfort temperature setpoint - 0.25 °C). If the room temperature value is larger than or equals to the sixth threshold, the controller 70 goes to step 807, that is, waiting for another round of operation. If the room temperature value is smaller than the sixth threshold, which means it is too cold inside of the room, and the stored solar energy is insufficient for space heating, thus, the combustion device 20 has to be activated. Then, the controller 70 operates the heating system 100 to apply the combustion device 20 for space heating.

Referring to Fig. 1, in conjunction with Figs. 2B, in step 805, the first three-way valve 61 is controlled to connect the lines 201 and 403, while block the line 202; meanwhile, the second three-way valve 62 and the third three-way valve 63 are both disabled. By this arrangement, the transfer fluid is heated within the combustion device 20, and circulates through the space heating apparatus 40 for output of heat into room space, then the cooled transfer fluid return to the combustion device 20 for being reheated.

It is to be understood, however, that even though numerous, characteristics and advantages of the present invention have been set forth in the foregoing description, together with details of the structure and function of the invention, the disclosed is illustrative only, and changes may be made in detail, especially in matters of number, shape, size, and arrangement of parts within the principles of the invention to the full extent indicated by the broadest general meaning of the terms in which the appended claims are expressed.

## Claims

1. A heating system (100) comprising:
a water tank (30) for storage of domestic water;
a solar collector (10) associated with the water tank for heating the domestic water;
a combustion device (20) coupled with the water tank via a heat exchanger (50) for heating the domestic water;
a space heating apparatus (40) adapted for being passed through by a hot transfer fluid thereby radiating heat into space,
wherein said combustion device (20) is coupled with the space heating apparatus (40) to heat the transfer fluid for space heating, and
wherein said space heating apparatus (40) is coupled with the water tank (30) via the heat exchanger (50) for allowing the domestic water to heat the transfer fluid for space heating;
**characterised in that**
said water tank defines therein an upper combustion heating zone (31) and a lower solar heating zone (32),
and a domestic water pipe circuit is connected between the heat exchanger (50) and the water tank (30) and has a water outgoing line (301) extending downwardly from top of the water tank to a predetermined distance;
wherein said upper combustion heating zone (31) and said lower solar heating zone (32) are defined by the bottom of the water outgoing line (301), thus, the domestic water at the lower solar heating zone is mainly extracted to the heat exchanger (50) via the water outgoing line (301) to heat the transfer fluid when the domestic water is applied for space heating; and
the heating system (100) further comprises a controller (70) operable to judge whether to enable the domestic water to heat the transfer fluid; if not, the controller (70) continues to judge whether to enable the combustion device (40) to heat the transfer fluid, and
the controller (70) is operable to judge whether to enable the combustion device to heat the domestic water by judging whether the temperature of the domestic water at the upper combustion heating zone (31) is smaller than a first threshold.

2. A heating system according to claim 1, wherein said heat exchanger is a plate heat exchanger disposed outside of the water tank.

3. A heating system according to claim 1, wherein said domestic water pipe circuit further comprises a first water incoming line (303) connected to the upper combustion heating zone (31) and a second water incoming line (309) connected to the lower solar heating zone (32); when the combustion device (20) heats the domestic water, the domestic water is extracted into the heat exchanger via the outgoing line (301), passes through the heat exchanger, and return into the upper combustion heating zone (31) via the first water incoming line (303); when the domestic water is applied for space heating, the domestic water is extracted into the heat exchanger via the outgoing line (301), passes through the heat exchanger, and return into the lower solar heating zone (32) via the second water incoming line (309).

4. A heating system according to claim 3, wherein said domestic water pipe circuit further comprises a common water incoming line (302) with one end connected to the heat exchanger, and a third three-way valve (63) connected with the common water incoming line (302) and the first and the second water incoming lines (303, 309).

5. A heating system according to claim 1, wherein said judgement whether to enable the domestic water to heat the transfer fluid comprises:
judging whether a room temperature value is smaller than a second threshold but larger than or equals to a third threshold;
judging whether an outdoor temperature value is smaller than a fourth threshold; and
judging whether a difference that the temperature of the domestic water at an outlet to the heat exchanger minus the temperature of the transfer fluid after passing through the space heating apparatus is larger than or equals to a fifth threshold.

6. A heating system according to claim 1, wherein said controller (70) is further operable to judge whether to enable the combustion device to heat the domestic water prior to judge whether to enable the domestic water to heat the transfer fluid.

7. A heating system according to claim 1, further comprising a transfer fluid pipe circuit connected among the combustion device (20), the space heating apparatus (40), and the heat exchanger (50); wherein said transfer fluid pipe circuit comprises a first and a second three-way valves (61, 62) disposed therein, said first and said second three-way valves are operable to enable the transfer fluid to circulate between the heat exchanger and the combustion device when the combustion device is applied for heating the domestic water, or enable the transfer fluid to circulate between the space heating apparatus and the combustion device when the combustion device is applied for space heating, or enable the transfer fluid to circulate among the heat exchanger, the space heating apparatus and the combustion device when the domestic water is applied for space heating.

8. A heating system according to claim 7, wherein each of said first and said second three-way valves (61, 62) is connected with the heat exchanger, the space heating apparatus, and the combustion device; when the combustion device is applied for heating the domestic water, the first and the second three-way valves are both operable to establish fluid communications between the heat exchanger and the combustion device; when the combustion device is applied for space heating, the first three-way valve (61) is operable to establish a fluid communication between the space heating apparatus and the combustion device, meanwhile, the second three-way valve (62) is disabled; when the domestic water is applied for space heating, the first three-way valve (61) is operable to establish a fluid communication between the heat exchanger and the combustion device, and the second three-way valve (62) is operable to establish a fluid communication between the heat exchanger and the space heating apparatus, meanwhile, the combustion device is not operated.

9. A heating system according to claim 1, wherein said solar collector comprises a solar coil (103) disposed within the lower solar heating zone (32) of the water tank to heat the domestic water.

## Patentansprüche

1. Heizanlage (100), umfassend:
einen Wasserspeicher (30) zum Speichern von Brauchwasser;
einen Solarkollektor (10), der mit dem Wasserspeicher zum Beheizen des Brauchwassers assoziiert ist;
eine Verbrennungsvorrichtung (20), die über einen Wärmetauscher (50) zum Beheizen des Brauchwassers an den Wasserspeicher gekoppelt ist;
eine Raumheizungseinrichtung (40), die derart angepasst ist, von einer Wärmeträgerflüssigkeit durchlaufen zu werden, um somit Wärme in den Raum abzustrahlen,
wobei die Verbrennungsvorrichtung (20) an die Raumheizungseinrichtung (40) gekoppelt ist, um die Trägerflüssigkeit zur Raumheizung zu beheizen, und
wobei die Raumheizungseinrichtung (40) über den Wärmetauscher (50) an den Wasserspeicher (30) gekoppelt ist, um es dem Brauchwasser zu ermöglichen, die Trägerflüssigkeit zur Raumheizung zu beheizen;
**dadurch gekennzeichnet, dass**
der Wasserspeicher darin eine obere Verbrennungsheizzone (31) und eine untere Solarheizzone (32) definiert,
und eine Brauchwasser-Leitungsführung zwischen dem Wärmetauscher (50) und dem Wasserspeicher (30) verbunden ist und eine Wasserabflussleitung (301) aufweist, die sich von der Oberseite des Wasserspeichers nach unten in einem vorbestimmten Abstand erstreckt;
wobei die obere Verbrennungsheizzone (31) und die untere Solarheizzone (32) durch die Unterseite der Wasserabflussleitung (301) definiert sind, wodurch das Brauchwasser an der unteren Solarheizzone hauptsächlich zu dem Wärmetauscher (50) über die Wasserablassleitung (301) abgezogen wird, um die Trägerflüssigkeit zu beheizen, wenn das Brauchwasser für die Raumheizung angewendet wird; und
die Heizanlage (100) weiter eine Steuerung (70) umfasst, die betrieben werden kann, um zu ermessen, ob das Brauchwasser zum Beheizen der Trägerflüssigkeit freigegeben wird; falls nicht, fährt die Steuerung (70) damit fort zu ermessen, ob die Verbrennungsvorrichtung freigegeben wird, um das Brauchwasser zu beheizen, und
wobei die Steuerung (70) betrieben werden kann, um ermessen, ob die Verbrennungsvorrichtung freigegeben wird, um das Brauchwasser zu beheizen, indem ermessen wird, ob die Temperatur des Brauchwassers an der oberen Verbrennungsheizzone (31) geringer ist als ein erster Grenzwert.

2. Heizanlage nach Anspruch 1, wobei der Wärmetauscher ein Plattenwärmetauscher ist, der außerhalb des Wasserspeichers angeordnet ist.

3. Heizanlage nach Anspruch 1, wobei die Brauchwasser-Leitungsführung weiter eine erste Wassereinlassleitung (303) umfasst, die mit der oberen Verbrennungsheizzone (31) verbunden ist, und eine zweite Wassereinlassleitung (309), die mit der unteren Solarheizzone (32) verbunden ist; wobei wenn die Verbrennungsvorrichtung (20) das Brauchwasser beheizt, das Brauchwasser über die Ablassleitung (301) in den Wärmetauscher abgezogen wird, durch den Wärmetauscher läuft und über die erste Wassereinlassleitung (303) in die obere Verbrennungsheizzone (31) zurückkehrt; wobei wenn das Brauchwasser zur Raumheizung angewendet wird, das Brauchwasser über die Ablassleitung (301) in den Wärmetauscher abgezogen wird, durch den Wärmetauscher läuft und über die zweite Wassereinlassleitung (309) in die untere Solarheizzone (32) zurückkehrt.

4. Heizanlage nach Anspruch 3, wobei die Brauchwasser-Leitungsführung weiter eine gemeinsame Wassereinlassleitung (302) umfasst, wobei ein Ende mit dem Wärmetauscher verbunden ist und ein drittes Dreiwegeventil (63) mit der gemeinsamen Wassereinlassleitung (302) und der ersten und der zweiten Wassereinlassleitung (303, 309) verbunden ist.

5. Heizanlage nach Anspruch 1, wobei das Ermessen, ob das Brauchwasser zum Beheizen der Trägerflüssigkeit freigegeben wird, Folgendes umfasst:
das Ermessen, ob ein Innentemperaturwert geringer als ein zweiter Grenzwert ist, aber höher als oder gleich einem dritten Grenzwert ist;
das Ermessen, ob ein Außentemperaturwert geringer als ein vierter Grenzwert ist; und
das Ermessen, ob ein Unterschied der Temperatur des Brauchwassers an einem Auslass zum Wärmetauscher, minus der Temperatur der Trägerflüssigkeit nach dem Hindurchführen durch die Raumheizungseinrichtung, höher als oder gleich einem fünften Grenzwert ist.

6. Heizanlage nach Anspruch 1, wobei die Steuerung (70) weiter betrieben werden kann um zu ermessen, ob die Verbrennungsvorrichtung freigegeben wird, um das Brauchwasser zu beheizen, bevor ermessen wird, ob das Brauchwasser freigegeben wird, um die Trägerflüssigkeit zu beheizen.

7. Heizanlage nach Anspruch 1, weiter umfassend eine Trägerflüssigkeits-Leitungsführung, die zwischen der Verbrennungsvorrichtung (20), der Raumheizungseinrichtung (40) und dem Wärmetauscher (50) verbunden ist; wobei die Trägerflüssigkeits-Leitungsführung ein erstes und ein zweites Dreiwegeventil (61, 62) umfasst, die darin angeordnet sind, wobei das erste und das zweite Dreiwegeventil jeweils betrieben werden kann, um die Trägerflüssigkeit freizugeben, zwischen dem Wärmetauscher und der Verbrennungsvorrichtung zu zirkulieren, wenn die Verbrennungsvorrichtung zum Beheizen des Brauchwassers angewendet wird, oder um die Trägerflüssigkeit freizugeben, zwischen der Raumheizungseinrichtung und der Verbrennungsvorrichtung zu zirkulieren, wenn die Verbrennungsvorrichtung zur Raumheizung angewendet wird, oder um die Trägerflüssigkeit freizugeben, in dem Wärmetauscher, der Raumheizungseinrichtung und der Verbrennungsvorrichtung zu zirkulieren, wenn das Brauchwasser zum Raumheizen angewendet wird.

8. Heizanlage nach Anspruch 7, wobei jedes der ersten und zweiten Dreiwegeventile (61, 62) mit dem Wärmetauscher, der Raumheizungseinrichtung und der Verbrennungsvorrichtung verbunden ist; wobei, wenn die Verbrennungsvorrichtung zum Beheizen des Brauchwassers verwendet wird, das erste und das zweite Dreiwegeventil beide betrieben werden können, um Flüssigkeitskommunikationen zwischen dem Wärmetauscher und der Verbrennungsvorrichtung herzustellen; wobei, wenn die Verbrennungsvorrichtung zum Raumheizen angewendet wird, das erste Dreiwegeventil (61) betrieben werden kann, um eine Flüssigkeitskommunikation zwischen der Raumheizungseinrichtung und der Verbrennungsvorrichtung herzustellen, während das zweite Dreiwegeventil (62) deaktiviert wird, wobei, wenn das Brauchwasser zur Raumheizung angewendet wird, das erste Dreiwegeventil (61) betrieben werden kann, um eine Flüssigkeitskommunikation zwischen dem Wärmetauscher und der Verbrennungsvorrichtung herzustellen und das zweite Dreiwegeventil (62) betrieben werden kann, um eine Flüssigkeitskommunikation zwischen dem Wärmetauscher und der Raumheizungseinrichtung herzustellen, während die Verbrennungsvorrichtung nicht betrieben wird.

9. Heizanlage nach Anspruch 1, wobei der Solarkollektor eine Solarspule (103) umfasst, die innerhalb der unteren Solarheizzone (32) des Wasserspeichers angeordnet ist, um das Brauchwasser zu beheizen.

## Revendications

1. Système de chauffage (100) comprenant :
un réservoir d'eau (30) pour le stockage d'eau domestique ;
un collecteur solaire (10) associé au réservoir d'eau pour chauffer l'eau domestique ;
un dispositif de combustion (20) accouplé au réservoir d'eau via un échangeur de chaleur (50) pour chauffer l'eau domestique ;
un appareil de chauffage d'espace (40) adapté pour être traversé par un fluide de transfert chaud faisant ainsi rayonner de la chaleur dans l'espace,
dans lequel ledit dispositif de combustion (20) est accouplé à l'appareil de chauffage d'espace (40) pour chauffer le fluide de transfert pour un chauffage d'espace, et
dans lequel ledit appareil de chauffage d'espace (40) est accouplé au réservoir d'eau (30) via l'échangeur de chaleur (50) pour permettre à l'eau domestique de chauffer le fluide de transfert pour un chauffage d'espace ;
**caractérisé en ce que**
ledit réservoir d'eau définit dans celui-ci une zone de chauffage à combustion supérieure (31) et une zone de chauffage solaire inférieure (32),
et un circuit de tuyaux d'eau domestique est raccordé entre l'échangeur de chaleur (50) et le réservoir d'eau (30) et comporte une conduite de sortie d'eau (301) s'étendant vers le bas depuis le haut du réservoir d'eau jusqu'à une distance prédéterminée ;
dans lequel ladite zone de chauffage à combustion supérieure (31) et ladite zone de chauffage solaire inférieure (32) sont définies par le fond de la conduite de sortie d'eau (301), ainsi, l'eau domestique au niveau de la zone de chauffage solaire inférieure est principalement extraite vers l'échangeur de chaleur (50) via la conduite de sortie d'eau (301) pour chauffer le fluide de transfert quand l'eau domestique est appliquée pour un chauffage d'espace ; et
le système de chauffage (100) comprend en outre un dispositif de commande (70) servant à juger s'il faut laisser l'eau domestique chauffer le fluide de transfert ; si non, le dispositif de commande (70) continue de juger s'il faut laisser le dispositif de combustion (40) chauffer le fluide de transfert, et
le dispositif de commande (70) sert à juger s'il faut permettre au dispositif de combustion de chauffer l'eau domestique en jugeant si la température de l'eau domestique au niveau de la zone de chauffage par combustion supérieure (31) est inférieure à un premier seuil.

2. Système de chauffage selon la revendication 1, dans lequel ledit échangeur de chaleur est un échangeur de chaleur à plaque disposé à l'extérieur du réservoir d'eau.

3. Système de chauffage selon la revendication 1, dans lequel ledit circuit de tuyaux d'eau domestique comprend en outre une première conduite d'entrée d'eau (303) raccordée à la zone de chauffage par combustion supérieure (31) et une deuxième conduite d'entrée d'eau (309) raccordée à la zone de chauffage solaire inférieure (32) ; quand le dispositif de combustion (20) chauffe l'eau domestique, l'eau domestique est extraite dans l'échangeur de chaleur via la conduite de sortie (301), traverse l'échangeur de chaleur et revient dans la zone de chauffage par combustion supérieure (31) via la première conduite d'entrée d'eau (303) ; quand l'eau domestique est appliquée pour un chauffage d'espace, l'eau domestique est extraite dans l'échangeur de chaleur via la conduite de sortie (301), traverse l'échangeur de chaleur, et revient dans la zone de chauffage solaire inférieure (32) via la deuxième conduite d'entrée d'eau (309).

4. Système de chauffage selon la revendication 3, dans lequel ledit circuit de tuyaux d'eau domestique comprend en outre une conduite d'entrée d'eau commune (302) avec une extrémité raccordée à l'échangeur de chaleur, et une troisième vanne trois voies (63) raccordée à la conduite d'entrée d'eau commune (302) et aux première et deuxième conduites d'entrée d'eau (303, 309).

5. Système de chauffage selon la revendication 1, dans lequel ledit jugement pour savoir s'il faut permettre à l'eau domestique de chauffer le fluide de transfert comprend :
le fait de juger si une valeur de température ambiante est inférieure à un deuxième seuil mais supérieure ou égale à un troisième seuil ;
le fait de juger si une valeur de température extérieure est inférieure à un quatrième seuil ; et
le fait de juger si une différence de la température de l'eau domestique à une sortie vers l'échangeur de chaleur moins la température du fluide de transfert après avoir traversé l'appareil de chauffage d'espace est supérieure ou égale à un cinquième seuil.

6. Système de chauffage selon la revendication 1, dans lequel ledit dispositif de commande (70) sert en outre à juger s'il faut permettre au dispositif de combustion de chauffer l'eau domestique avant de juger s'il faut permettre à l'eau domestique de chauffer le fluide de transfert.

7. Système de chauffage selon la revendication 1, comprenant en outre un circuit de tuyaux de fluide de transfert raccordé entre le dispositif de combustion (20), l'appareil de chauffage d'espace (40) et l'échangeur de chaleur (50) ; dans lequel ledit circuit de tuyaux de fluide de transfert comprend une première et une deuxième vanne trois voies (61, 62) disposées dans celui-ci, lesdites première et deuxième vannes trois voies servent à permettre au fluide de transfert de circuler entre l'échangeur de chaleur et le dispositif de combustion quand le dispositif de combustion est appliqué pour chauffer l'eau domestique, ou permettre au fluide de transfert de circuler entre l'appareil de chauffage d'espace et le dispositif de combustion quand le dispositif de combustion est appliqué pour un chauffage d'espace, ou permettre au fluide de transfert de circuler entre l'échangeur de chaleur, l'appareil de chauffage d'espace et le dispositif de combustion quand l'eau domestique est appliquée pour un chauffage d'espace.

8. Système de chauffage selon la revendication 7, dans lequel chacune desdites première et deuxième vannes trois voies (61, 62) est raccordée à l'échangeur de chaleur, à l'appareil de chauffage d'espace et au dispositif de combustion ; quand le dispositif de combustion est appliqué pour chauffer l'eau domestique, les première et deuxième vannes trois voies servent toutes les deux à établir des communications fluidiques entre l'échangeur de chaleur et le dispositif de combustion ; quand le dispositif de combustion est appliqué pour un chauffage d'espace, la première vanne trois voies (61) sert à établir une communication fluidique entre l'appareil de chauffage d'espace et le dispositif de combustion, la deuxième vanne trois voies (62), pendant ce temps, est désactivée ; quand l'eau domestique est appliquée pour un chauffage d'espace, la première vanne trois voies (61) sert à établir une communication fluidique entre l'échangeur de chaleur et le dispositif de combustion, et la deuxième vanne trois voies (62) sert à établir une communication fluidique entre l'échangeur de chaleur et l'appareil de chauffage d'espace, le dispositif de combustion, pendant ce temps, ne fonctionne pas.

9. Système de chauffage selon la revendication 1, dans lequel ledit collecteur solaire comprend une bobine solaire (103) disposée dans la zone de chauffage solaire inférieure (32) du réservoir d'eau pour chauffer l'eau domestique.
